# EUROPEAN PATENT SPECIFICATION

(11) **EP 1 317 880 B1**
(45) Date of publication and mention of the grant of the patent: **31.08.2005**
(21) Application number: 02079494.7
(22) Date of filing: 29.10.2002
(51) Int. Cl.: A01J 9/00

(54) **An assembly of a milk tank and a measuring probe**
Vorrichtung mit einem Milchtank und mit einem Messfühler
Assemblage d'un réservoir à lait et d'une sonde de mesure

(30) Priority: 05.12.2001 NL 1019496
(43) Date of publication of application: 11.06.2003
(60) Divisional application: 05076027.1
(73) Proprietor: Lely Enterprises AG, 6300 ZUG (CH)
(72) Inventor: Veenstra, Aalze, 2805 SJ Gouda (NL)
(74) Representative: Corten, Maurice Jean F.M.

(56) References cited:
- WO-A-93/06438
- US-A- 2 695 453
- US-A- 3 102 341
- US-A- 4 205 315

## Description

The invention relates to an assembly of a milk tank and a measuring probe according to the preamble of claim 1.

Such an assembly is known for example from US-A-3,102,341.

An object of the present invention is to provide an alternative assembly of a milk tank and a measuring probe, in which it is possible to perform checking, repairing and, if desired, replacing of the measuring probe in a simple manner.

To this end, an assembly of a milk tank and a measuring probe of the sort as defined above comprises in accordance with the invention the features of the characterizing part of claim 1. Due to this, in the assembled position, the fastening device bears on the rim of the manhole portion, so that the fastening device and consequently the measuring probe can be reached at all times in a simple manner via the manhole portion.

Because the fastening device comprises a C-shaped profile section of flexible material, an adaptation of the fastening device to the diameter of the manhole is achieved in a constructively simple manner. It is particularly advantageous if the C-shaped profile section is made of stainless steel.

In one embodiment, the assembly comprises a cover, the arrangement being such that the manhole can be closed by the cover and the fastening device can be positioned between the cover and the manhole. Thus the cover ensures an additional attachment of the fastening device, no other fastening means, such as screws, welds and the like, being required for fixing the measuring probe. Such additional means may involve contamination of the interior of the milk tank.

It is pointed out here that a fastening device that can be attached to the manhole portion by means of screws and the like is known per se from US 4,205,315.

For the purpose of using only one fastening device for manholes with different diameters, the fastening device is preferably a fastening device that can be adapted to the diameter of the manhole.

If the radial protrusion comprises a hook, a fastening of the measuring probe to the milk tank is obtained in a simple manner due to the fact that at least a part of the hook can be brought into engagement with the rim.

In order to prevent the fastening device from undesirably moving in a direction away from the space and from falling into the milk tank, the fastening device is provided with a clamping protrusion for abutting, in the assembled position of fastening device and milk tank, against a part of the manhole portion that faces the space of the milk tank.

If the fastening device comprises an oval profile section having a long axis that is greater than the diameter of the manhole, and the oval profile section is open, i.e. not closed, then, in the assembled position of fastening device and milk tank, the fastening device is prevented from undesirably moving in a direction away from the space, without the use of clamping protrusions being required.

For the purpose of mounting the oval profile section in a simple manner, the short axis of the oval profile section is smaller than the diameter of the manhole.

If the oval profile section has a round cross-section, then shade effects are limited.

In an embodiment of an assembly according to the invention, the fastening device comprises a first fastening portion that can be attached to the manhole portion, and a second fastening portion that can be attached to the measuring probe. The first fastening portion may for example be an eye, and the second fastening portion a hook that can be placed in the eye. Besides, the first fastening portion may be the C-shaped profile section, and the second fastening portion a bar capable of being fastened to the C-shaped profile section on one side, and bearing the measuring probe on the other side.

In an alternative embodiment of an assembly according to the invention, the fastening device can be attached to the cover. Also in this way, replacement or repair of the measuring probe can be achieved in a simple manner.

If the measuring probe is a measuring probe for measuring the cleanliness of the interior of the milk tank, it is possible to measure when the milk tank has to be cleaned or to check whether the milk tank has been cleaned sufficiently. Additionally or alternatively, the measuring probe may be a measuring probe for measuring the amount of liquid present in the milk tank. Additionally or alternatively, the measuring probe may be a measuring probe for measuring the temperature of the liquid present in the milk tank. Additionally or alternatively, the measuring probe may be a measuring probe for measuring the chemical composition of the liquid present in the milk tank.

The measuring probe is preferably a measuring probe for measuring in a contactless manner the cleanliness, the amount, the temperature and/or the chemical composition of the liquid present in the milk tank. Such a contactless measuring probe is known per se and can function for example in an optical manner (for example by picture processing, colour recognition and the like), in an ultrasonic manner, by means of sound reflections, and by means of odour recognition (olfactometer).

Measuring probes that measure the aforementioned characteristics by contact, may also be applied. In this connection, measuring probes that measure the conductivity, the pH, the fat content, the protein content or the penicillin content and the like, may for example be taken into consideration.

The invention will be explained hereinafter in greater detail with reference to an exemplary embodiment illustrated in the drawing, in which:
Figure 1 shows diagrammatically in side view an assembly according to the present invention,
Figure 2 shows diagrammatically a fastening device comprising a C-shaped profile section,
Figure 3 shows diagrammatically in a perspective view an assembly of a milk tank and a fastening device in the form of an oval profile section, and
Figure 4 is a cross-sectional view of Figure 3.

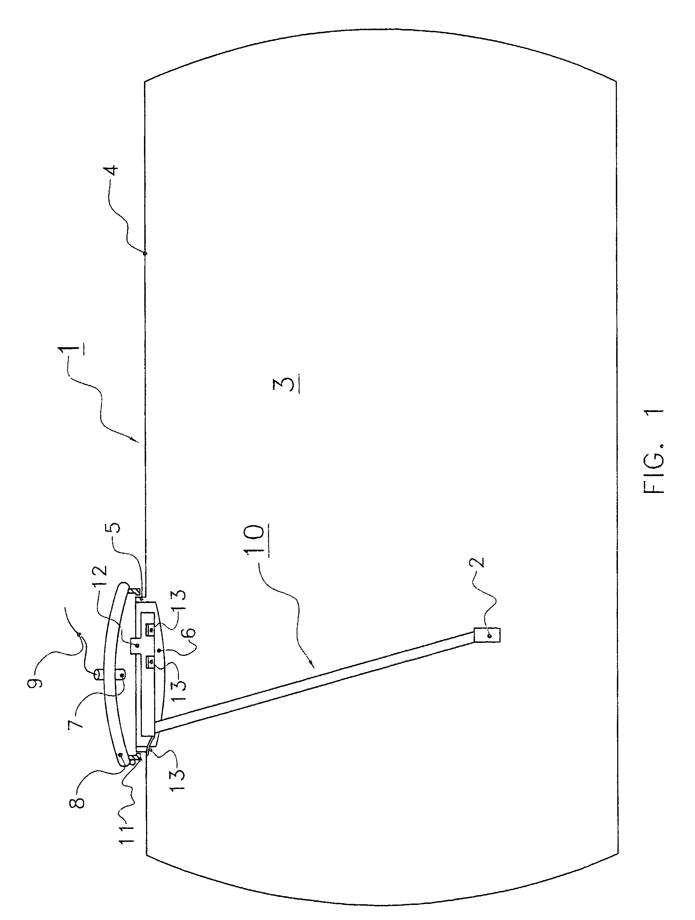

An assembly of a milk tank 1 and a measuring probe 2 is shown diagrammatically in side view in Figure 1. The milk tank 1 is provided with a space 3 for containing milk. In the case that the milk tank 1 is cleaned, it is possible for the space 3 to contain cleaning liquid. The milk tank 1 further has a wall 4. The wall 4 is provided with an aperture portion for a usual aperture in the wall 4, in the embodiment shown constituted by a manhole portion 5 defining a manhole 6. The measuring probe 2 is at least partially located in the space 3 of the milk tank 1.

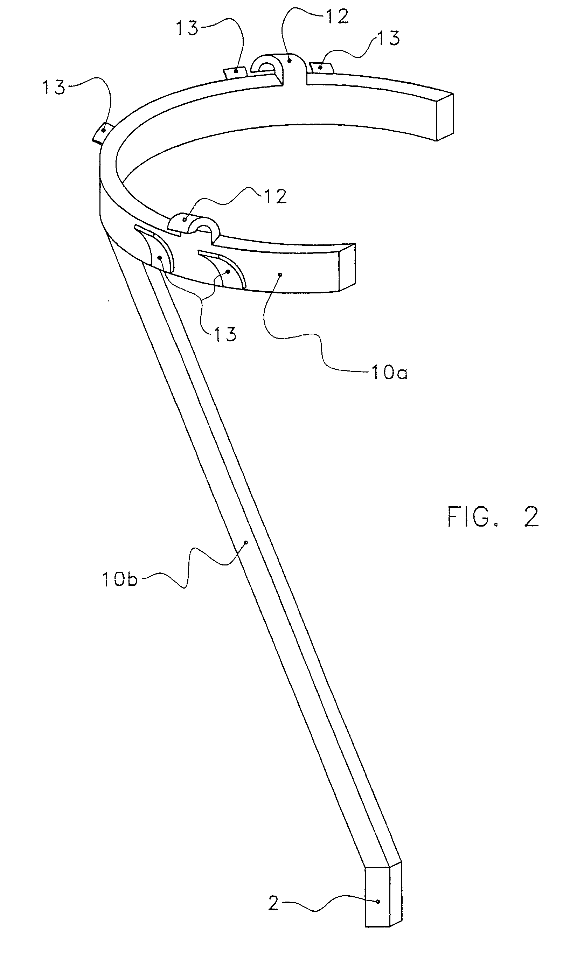

The measuring probe may be disposed on a float that is capable of floating on a liquid present in the milk tank. Such a measuring probe is preferably capable of transmitting the data obtained in a wireless manner, for example to a receiver 7 disposed on the inner side of a cover 8 closing the manhole 6. Said receiver is connected for example via a cable 9 to a computer for processing the data. Data transmission can also take place in an inductive manner through the wall 4. In particular if the measuring probe is a contactless measuring probe, i.e. a measuring probe that obtains measured values without physical contact with the liquid, the measuring probe can also be disposed on the inner side of the cover. Data can be obtained for example in an optical manner (picture processing, colour recognition), in an ultrasonic manner, via sound reflections, and via infrared or the like. In the embodiment shown in Figure 1, the assembly comprises a fastening device 10 for fastening the measuring probe 2 to at least a part of the manhole portion 5. The manhole portion 5 comprises a rim 11, which rim 11 extends in a direction away from the space 3. The fastening device 10, in the embodiment shown (see Figure 2) comprising a C-shaped profile section of flexible material, can be positioned between the cover 8 and the rim 11 of the manhole 6, and is thus kept between them by clamping. In the embodiment shown the C-shaped profile section is provided with two radial protrusions, each having a recess, (in particular hooks 12) intended for being engaged with the rim 11. In the assembled position of fastening device 10 and milk tank 1, the rim 11 is located in the recess. It will be obvious that the invention is not limited to two radial protrusions, but that any other number is applicable as well. Furthermore, the C-shaped profile section comprises clamping protrusions 13 that, in the assembled position, abut against the part of the manhole portion 5 that faces the space 3.

Because of the C-shaped profile section and due to the fact that the profile section is preferably made of flexible material, the fastening device 10 is suitable for being used with manholes with different diameters. Other profile sections or constructions of fastening devices having a size that can be adapted to the diameter of the manhole are also possible. In this connection, rings that telescope in respectively out may for example be taken into consideration.

In particular stainless steel is suitable as flexible material, although synthetic material is also appropriate because of its low sensitivity to aging.

Although the fastening device may be a one-piece fastening device, a two-piece fastening device is also possible. A first fastening portion (for example the C-shaped profile section) 10a may then be fastened to the manhole portion, and a second fastening portion (for example a bar) 10b may then be fastened to the measuring probe 2, as shown in Figure 2.

Alternatively or additionally, the fastening device may be attached to the cover.

The measuring probe can measure the cleanliness of the interior of the milk tank, the amount of liquid present in the milk tank, the temperature of the liquid present in the milk tank and/or the chemical composition (in particular the penicillin content) of the liquid present in the milk tank. This can take place in a contactless manner or by contact with the liquid. On the basis of the measured values, various decisions can be taken and/or certain checks can be carried out.

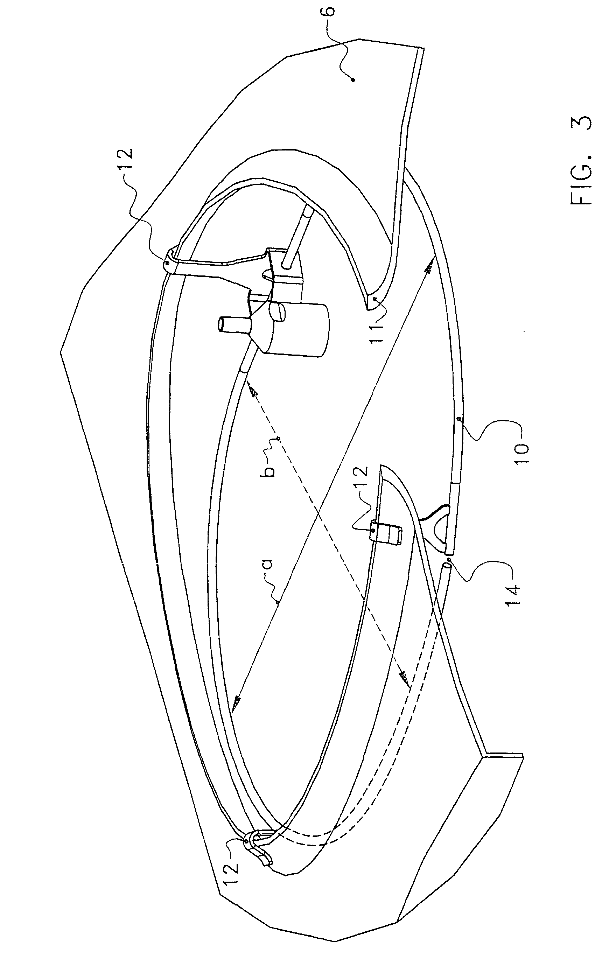

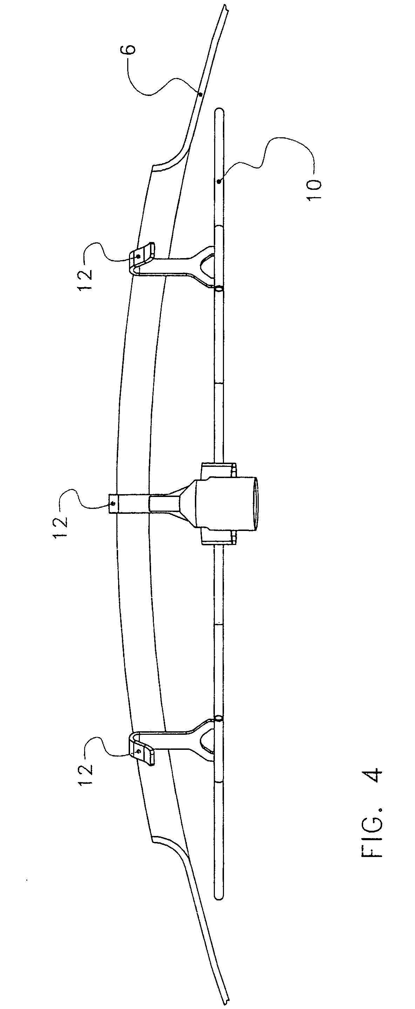

In Figures 3 and 4, the fastening device is designed as an oval profile section 10, the long axis a of the profile section being greater than the diameter of the manhole. Thus, undesired movement of the fastening device in a direction away from the milk tank is prevented, due to the fact that the profile section then comes in abutment against the inner wall of the milk tank. An interruption 14 simplifies the mounting of the fastening device to the milk tank, and so does a short axis b of the oval profile section, said axis b being smaller than the diameter of the manhole.

## Claims

1. An assembly of a milk tank (1) and a measuring probe (2), the milk tank (1) being provided with a space (3) for containing milk and with a wall (4) having a manhole portion (5) defining a manhole (6), which manhole (6) comprises a rim (11) that extends in a direction away from the space (3), the measuring probe (2) being located at least partially in the space (3) of the milk tank (1), the assembly comprising a fastening device (10) for fastening the measuring probe (2) to at least a part of the manhole portion (5), **characterized in that** the fastening device (10) being provided with at least one radial protrusion (12) that comprises a recess for receiving, in the assembled position of fastening device (10) and milk tank (1), at least a part of the rim (11) of the manhole portion (5), and **in that** the fastening device (10) comprises a C-shaped profile section of flexible material.

2. An assembly as claimed in claim 1, **characterized in that** the C-shaped profile section is made of stainless steel.

3. An assembly as claimed in claim 1 or 2, **characterized in that** the assembly comprises a cover (8), **in that** the manhole (6) can be closed by the cover (8), and **in that** the fastening device (10) can be positioned between the cover (8) and the manhole (6).

4. An assembly as claimed in claim 1, 2 or 3, **characterized in that** the manhole (6) has a diameter, and **in that** the fastening device (10) is a fastening device (10) that can be adapted to the diameter of the manhole (6).

5. An assembly as claimed in any one of the preceding claims, **characterized in that** the radial protrusion comprises a hook (12).

6. An assembly as claimed in any one of the preceding claims, **characterized in that** the fastening device (10) is provided with a clamping protrusion (13) for abutting, in the assembled position of fastening device (10) and milk tank (1), against a part of the manhole portion (5) that faces the space (3) of the milk tank (1).

7. An assembly as claimed in any one of the preceding claims, **characterized in that** the fastening device (10) comprises an oval profile section having a long axis (a) that is greater than the diameter of the manhole (6), and **in that** the oval profile section is open.

8. An assembly as claimed in claim 7, **characterized in that** the short axis (b) of the oval profile section is smaller than the diameter of the manhole (6).

9. An assembly as claimed in claim 7 or 8, **characterized in that** the oval profile section has a round cross-section.

10. An assembly as claimed in any one of the preceding claims, **characterized in that** the fastening device (10) comprises a first fastening portion (10a) that can be attached to the manhole portion (5) and a second fastening portion that (10b) can be attached to the measuring probe (2).

11. An assembly as claimed in claim 3, **characterized in that** the fastening device (10) can be attached to the cover (8).

12. An assembly as claimed in any one of the preceding claims, **characterized in that** the measuring probe (2) is a measuring probe for measuring the cleanliness of the interior of the milk tank (1).

13. An assembly as claimed in any one of the preceding claims, **characterized in that** the measuring probe (2) is a measuring probe for measuring the amount of liquid present in the milk tank (1).

14. An assembly as claimed in any one of the preceding claims, **characterized in that** the measuring probe (2) is a measuring probe for measuring the temperature of the liquid present in the milk tank (1).

15. An assembly as claimed in any one of the preceding claims, **characterized in that** the measuring probe (2) is a measuring probe for measuring the chemical composition of the liquid present in the milk tank (1).

16. An assembly as claimed in claim 10 or 11, **characterized in that** the measuring probe (2) is a measuring probe for measuring in a contactless manner the cleanliness, the amount, the temperature and/or the chemical composition of the liquid present in the milk tank (1).

## Patentansprüche

1. Anordnung mit einem Milchtank (1) und einem Meßfühler (2), wobei der Milchtank (1) mit einem Raum (3) zur Aufnahme von Milch und mit einer Wand (4) versehen ist, die einen ein Mannloch (6) bildenden Mannloch-Abschnitt (5) aufweist, wobei das Mannloch (6) einen Rand (11) umfaßt, der sich in von dem Raum (3) abgewandter Richtung erstreckt, wobei der Meßfühler (2) zumindest teilweise in dem Raum (3) des Milchtanks (1) angeordnet ist, wobei die Anordnung eine Befestigungsvorrichtung (10) zur Befestigung des Meßfühlers (2) an mindestens einem Teil des Mannloch-Abschnittes (5) umfaßt,
**dadurch gekennzeichnet, daß** die Befestigungsvorrichtung (10) mit mindestens einem radialen Vorsprung (12) versehen ist, der eine Ausnehmung umfaßt, die im zusammengebauten Zustand der Befestigungsvorrichtung (10) und des Milchtanks (1) zumindest einen Teil des Randes (11) des Mannloch-Abschnittes (5) aufnimmt, und daß die Befestigungsvorrichtung (10) einen C-förmigen Profilabschnitt aus elastischem Material umfaßt.

2. Anordnung nach Anspruch 1,
**dadurch gekennzeichnet, daß** der C-förmige Profilabschnitt aus rostfreiem Stahl hergestellt ist.

3. Anordnung nach Anspruch 1 oder 2,
**dadurch gekennzeichnet, daß** die Anordnung einen Deckel (8) umfaßt, daß das Mannloch durch den Deckel (8) geschlossen werden kann, und daß die Befestigungsvorrichtung (10) zwischen dem Deckel (8) und dem Mannloch (6) angeordnet werden kann.

4. Anordnung nach Anspruch 1, 2 oder 3,
**dadurch gekennzeichnet, daß** das Mannloch (6) einen Durchmesser aufweist, und daß die Befestigungsvorrichtung (10) eine Befestigungsvorrichtung (10) ist, die an den Durchmesser des Mannloches (6) angepaßt werden kann.

5. Anordnung nach einem der vorhergehenden Ansprüche,
**dadurch gekennzeichnet, daß** der radiale Vorsprung einen Haken (12) umfaßt.

6. Anordnung nach einem der vorhergehenden Ansprüche,
**dadurch gekennzeichnet, daß** die Befestigungsvorrichtung (10) mit einem Klemmvorsprung (13) versehen ist, der im zusammengebauten Zustand der Befestigungsvorrichtung (10) und des Milchtanks (1) an einem Teil des Mannloch-Abschnittes (5) anliegt, der dem Raum (3) des Milchtanks (1) zugewandt ist.

7. Anordnung nach einem der vorhergehenden Ansprüche,
**dadurch gekennzeichnet, daß** die Befestigungsvorrichtung (10) einen ovalen Profilabschnitt umfaßt, der eine lange Achse (a) aufweist, die größer ist als der Durchmesser des Mannloches (6), und daß der ovale Profilabschnitt offen ist.

8. Anordnung nach Anspruch 7,
**dadurch gekennzeichnet, daß** die kurze Achse (b) des ovalen Profilabschnittes kleiner ist als der Durchmesser des Mannloches (6).

9. Anordnung nach Anspruch 7 oder 8,
**dadurch gekennzeichnet, daß** der ovale Profilabschnitt einen runden Querschnitt hat.

10. Anordnung nach einem der vorhergehenden Ansprüche,
**dadurch gekennzeichnet, daß** die Befestigungsvorrichtung (10) einen ersten Befestigungsteil (10a) umfaßt, der an dem Mannloch-Abschnitt (5) angebracht werden kann, sowie einen zweiten Befestigungsteil (10b), der an dem Meßfühler (2) angebracht werden kann.

11. Anordnung nach Anspruch 3,
**dadurch gekennzeichnet, daß** die Befestigungsvorrichtung (10) an dem Deckel (8) angebracht werden kann.

12. Anordnung nach einem der vorhergehenden Ansprüche,
**dadurch gekennzeichnet, daß** der Meßfühler (2) ein Meßfühler zum Messen der Sauberkeit des Inneren des Milchtanks (1) ist.

13. Anordnung nach einem der vorhergehenden Ansprüche,
**dadurch gekennzeichnet, daß** der Meßfühler (2) ein Meßfühler zum Messen der in dem Milchtank (1) befindlichen Flüssigkeitsmenge ist.

14. Anordnung nach einem der vorhergehenden Ansprüche,
**dadurch gekennzeichnet, daß** der Meßfühler (2) ein Meßfühler zum Messen der Temperatur der in dem Milchtank (1) befindlichen Flüssigkeit ist.

15. Anordnung nach einem der vorhergehenden Ansprüche,
**dadurch gekennzeichnet, daß** der Meßfühler (2) ein Meßfühler zum Messen der chemischen Zusammensetzung der in dem Milchtank (1) befindlichen Flüssigkeit ist.

16. Anordnung nach Anspruch 10 oder 11,
**dadurch gekennzeichnet, daß** der Meßfühler (2) ein Meßfühler zum kontaktlosen Messen der Sauberkeit, der Menge, der Temperatur und/oder der chemischen Zusammensetzung der in dem Milchtank (1) befindlichen Flüssigkeit ist.

## Revendications

1. Assemblage d'un réservoir à lait (1) et d'une sonde de mesure (2), le réservoir à lait (1) étant muni d'un espace (3) pour contenir du lait et d'une paroi (4) ayant une partie de regard (5) définissant un regard (6), lequel regard (6) comprend un rebord (11) qui s'étend dans une direction à distance de l'espace (3), la sonde de mesure (2) étant située au moins partiellement dans l'espace (3) du réservoir à lait (1), l'assemblage comprenant un dispositif de fixation (10) pour fixer la sonde de mesure (2) à au moins une partie de la partie de regard (5), **caractérisé en ce que** le dispositif de fixation (10) est muni d'au moins une protubérance radiale (12) qui comprend un évidement pour recevoir, dans la position assemblée du dispositif de fixation (10) et du réservoir à lait (1), au moins une partie du rebord (11) de la partie de regard (5), et **en ce que** le dispositif de fixation (10) comprend une section de profil en forme de C en un matériau flexible.

2. Assemblage selon la revendication 1, **caractérisé en ce que** la section de profil en forme de C est faite d'acier inoxydable.

3. Assemblage selon la revendication 1 ou 2, **caractérisé en ce que** l'assemblage comprend un couvercle (8), **en ce que** le regard (6) peut être fermé par le couvercle (8) et **en ce que** le dispositif de fixation (10) peut être positionné entre le couvercle (8) et le regard (6).

4. Assemblage selon la revendication 1, 2 ou 3, **caractérisé en ce que** le regard (6) a un diamètre, et **en ce que** le dispositif de fixation (10) est un dispositif de fixation (10) qui peut être adapté au diamètre du regard (6).

5. Assemblage selon l'une quelconque des revendications précédentes, **caractérisé en ce que** la protubérance radiale comprend un crochet (12).

6. Assemblage selon l'une quelconque des revendications précédentes, **caractérisé en ce que** le dispositif de fixation (10) est muni d'une protubérance de serrage (13) destinée à venir en butée, dans la position assemblée du dispositif de fixation (10) et du réservoir à lait (1), contre une partie de la partie de regard (5) qui fait face à l'espace (3) du réservoir à lait (1).

7. Assemblage selon l'une quelconque des revendications précédentes, **caractérisé en ce que** le dispositif de fixation (10) comprend une section de profil ovale ayant un axe long (a) qui est plus grand que le diamètre du regard (6) et **en ce que** la section de profil ovale est ouverte.

8. Assemblage selon la revendication 7, **caractérisé en ce que** l'axe court (b) de la section de profil ovale est plus petit que le diamètre du regard (6).

9. Assemblage selon la revendication 7 ou 8, **caractérisé en ce que** la section de profil ovale présente une section en coupe ronde.

10. Assemblage selon l'une quelconque des revendications précédentes, **caractérisé en ce que** le dispositif de fixation (10) comprend une première partie de fixation (10a) qui peut être attachée à la partie de regard (5) et une seconde partie de fixation (10b) qui peut être attachée à la sonde de mesure (2).

11. Assemblage selon la revendication 3, **caractérisé en ce que** le dispositif de fixation (10) peut être attaché au couvercle (8).

12. Assemblage selon l'une quelconque des revendications précédentes, **caractérisé en ce que** la sonde de mesure (2) est une sonde de mesure destinée à mesurer la propreté de l'intérieur du réservoir à lait (1).

13. Assemblage selon l'une quelconque des revendications précédentes, **caractérisé en ce que** la sonde de mesure (2) est une sonde de mesure destinée à mesurer la quantité de liquide présent dans le réservoir à lait (1).

14. Assemblage selon l'une quelconque des revendications précédentes, **caractérisé en ce que** la sonde de mesure (2) est une sonde de mesure destinée à mesurer la température du liquide présent dans le réservoir à lait (1).

15. Assemblage selon l'une quelconque des revendications précédentes, **caractérisé en ce que** la sonde de mesure (2) est une sonde de mesure destinée à mesurer la composition chimique du liquide présent dans le réservoir à lait (1).

16. Assemblage selon la revendication 10 ou 11, **caractérisé en ce que** la sonde de mesure (2) est une sonde de mesure destinée à mesurer sans contact la propreté, la quantité, la température et/ou la composition chimique du liquide présent dans le réservoir à lait (1).
